Europäisches Patentamt

European Patent Office

Office européen des brevets

(19)

(11) Veröffentlichungsnummer: **0 231 474**
B1

(12)

# EUROPÄISCHE PATENTSCHRIFT

(45) Veröffentlichungstag der Patentschrift:
05.09.90

(21) Anmeldenummer: 86116789.8

(22) Anmeldetag: 03.12.86

(51) Int. Cl.⁵: **G01P 13/02,** G01P 3/48,
G01D 5/249, F02P 7/06

(54) Einrichtung zur Absolutwegerfassung.

(30) Priorität: 16.12.85 DE 3544452

(43) Veröffentlichungstag der Anmeldung:
12.08.87 Patentblatt 87/33

(45) Bekanntmachung des Hinweises auf die Patenterteilung:
05.09.90 Patentblatt 90/36

(84) Benannte Vertragsstaaten:
CH DE FR IT LI

(56) Entgegenhaltungen:
EP-A- 0 094 828
DE-A- 2 621 179
DE-A- 2 826 609
FR-A- 2 529 262
GB-A- 1 366 160
GB-A- 2 039 609
US-A- 4 319 151

PATENT ABSTRACTS OF JAPAN, Band 6,
Nr. 192 (P-145), 30. September 1982, Seite 116 P 145; &
JP-A-57 103 061 (OKI ENGINEERING K.K.) 26-06-1982

(73) Patentinhaber: Siemens Aktiengesellschaft,
Wittelsbacherplatz 2, D-8000 München 2(DE)

(72) Erfinder: Zägelein, Walter, Dr., Pestalozzring 33,
D-8501 Rosstal(DE)
Erfinder: Rechinger, Dieter, Germersheimer Strasse 119,
D-8500 Nürnberg 50(DE)

**Beschreibung**

Die Erfindung bezieht sich auf eine Einrichtung zur Absolutwegerfassung mit einem über einen vorgegebenen Meßweg eine Vielzahl von Umdrehungen ausführenden Lagegeber, wobei der Lagegeber jeweils ein seiner Winkelstellung entsprechendes Lagesignal abgibt, und einem mit dem Lagegeber gekuppelten Umdrehungsgeber, wobei von einer Verarbeitungseinrichtung die jeweilige Anzahl von Umdrehungen mit der jeweilige Lage innerhalb einer Umdrehung zu einem Absolutweg überlagerbar ist.

Handelsübliche Drehmelder lassen nur eine zyklische Wegerfassung zu. Da hierbei jedoch bei einem Ausfall der Geberspannung und zwischenzeitlicher Lageänderung Fehlmessungen erfolgen, was insbesondere beim Einsatz dieser Einrichtungen in der Robotertechnik verhängnisvolle Fehlhandlungen nach sich ziehen könnte, werden bei solchen sicherheitskritischen Anwendungen im allgemeinen Absolutweggeber verwendet. Diese sind jedoch relativ kompliziert und somit störanfällig. Ferner ist eine direkte räumliche Nähe zwischen derartigen Gebern und sich erwärmenden elektrischen Bauteilen problematisch, da übliche Absolutweggeber ein temperaturkritisches Verhalten aufweisen. Gerade jedoch bei modernen Motoren werden im Zuge optimaler Auslegung relativ hohe Betriebstemperaturen vorgesehen.

Eine Einrichtung der eingangs genannten Art ist aus der DE-A-3 416 090 bekannt. Durch die Kombination eines Lagegebers und eines Umdrehungsgebers wird damit eine sichere Absolutwegerfassung über den vollen Meßweg ermöglicht. Der Lagegeber und der Umdrehungsgeber sind dabei jedoch relativ aufwendige und empfindliche Elemente.

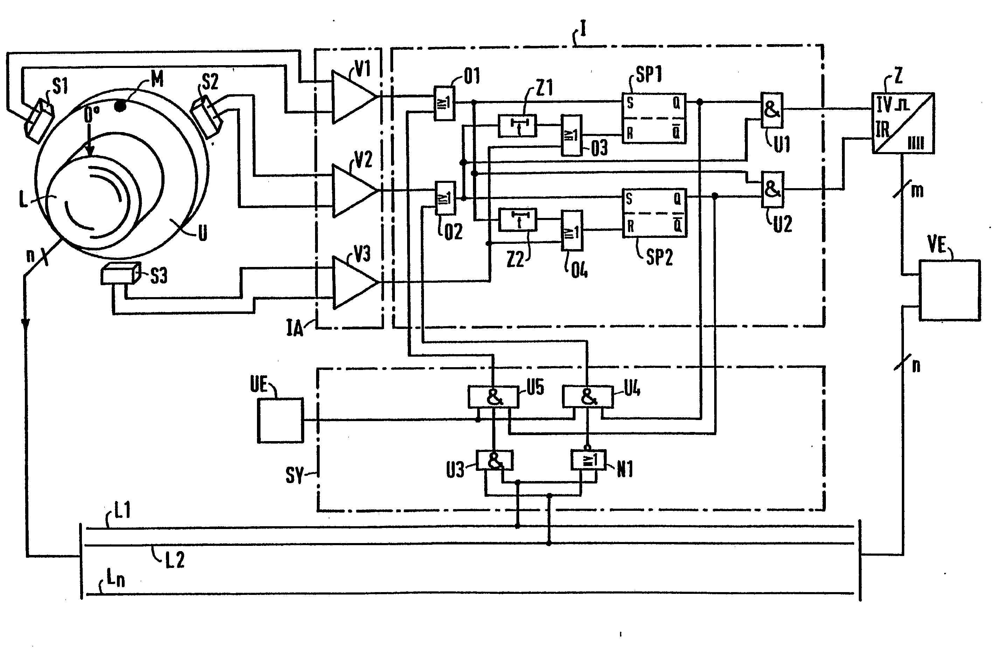

Ein von seinem Prinzip her sehr robuster Umdrehungsgeber, der unter Zugrundelegung des Wiegand-Effekts arbeitet, ist im Sonderdruck aus "Der Konstrukteur" Jan./Febr., März 1983; Verlag für Technik und Wirtschaft; Wiesbaden; "Theorie und Praxis der Wiegand-Sensoren" Bild 12b bekannt. Der Vorteil derartiger Sensoren liegt darin, daß diese ohne eine gesonderte Stromversorgungseinrichtung einen Spannungsimpuls liefern, dessen Amplitude im Gegensatz zu denen eines Induktivgebers unabhängig von der Relativgeschwindigkeit zwischen feststehendem und bewegtem Teil des Meßsystems ist. Dabei sind die Sensoren für einen sehr großen Temperaturbereich einsetzbar, es besteht ein hoher Signal-/Rauschabstand und die Ausgänge der Sensoren sind kurzschlußsicher. Bei der Anordnung von Magnet, Wiegand-Draht und zugehöriger Spule eines solchen Systems ist es sowohl möglich, daß der Wiegand-Draht beweglich angeordnet und der Magnet mit der Sensorspule ortsfest ist, ebenso kann auch eine Anordnung aus beweglichem Magnet und feststehendem Wiegand-Draht mit zugehöriger Spule vorgesehen sein. Gleichartig zum Wiegand-Effekt ist die Large-Barkhausen-Discontinuity anzusehen. Bei Verwendung nur eines Sensors liegt jedoch stets eine gewisse Schaltunschärfe und auch Schalthysterese vor.

Aufgabe der Erfindung ist es, eine Einrichtung der eingangs genannten Art so auszubilden, daß diese auch bei Verwendung eines einen Spannungsstoß auslösenden Umdrehungsgebes ein eindeutiges Schaltverhalten aufweist.

Gemäß der Erfindung wird diese Aufgabe dadurch gelöst, daß der Lagegeber mit dem Umdrehungsgeber starr verbunden ist, daß der Umdrehungsgeber unter Anwendung des Wiegand-Effekts oder der Large-Barkhausen-Discontinuity pro Umdrehung eine vorgegebene Anzahl von in ihrer Amplitude geschwindigkeitsunabhängigen Spannungsstössen abgibt, daß durch den Umdrehungsgeber während jeder Umdrehung in drei über den Umfang des Umdrehungsgebers verteilten Sensoren jeweils ein Spannungsstoß auslösbar ist, so daß auf einen der Sensoren als Basissensor im Uhrzeigersinn die beiden anderen Sensoren als ein erster Sensor und als ein zweiter Sensor folgen, daß zum Bewerten von den Spannungsstössen zugeordneten Impulsen im Hinblick auf das Vollführen jeweils einer richtungsspezifischen Umdrehung zwei Speicherglieder einer Impulsausworteschaltung vorgesehen sind, die beim Vorliegen eines Spannungsstoßes im Basissensor in eine Grundstellung setzbar sind, daß beim Vorliegen eines Spannungsstosses im ersten Sensor das erste Speicherglied in dessen Arbeitsstellung setzbar ist, das zweite Speicherglied in dessen Grundstellung setzbar ist und beim Vorliegen einer Arbeitsstellung des zweiten Speichergliedes ein eine Umdrehung im Gegenuhrzeigersinn anzeigendes Umdrehungssignal auslösbar ist, das beim Vorliegen eines Spannungsstosses im zweiten Sensor das zweite Speicherglied in dessen Arbeitsstellung setzbar ist, daß erste Speicherglied in die Grundstellung setzbar ist und beim Vorliegen einer Arbeitsstellung des ersten Speichergliedes ein eine Umdrehung im Uhrzeigersinn anzeigendes Umdrehungssignal auslösbar ist und daß die Umdrehungssignale in einem Vor-Rückwärts-Zähler summierbar sind, dessen Zählerstand die jeweils aktuelle Anzahl der vollen Umdrehungen innerhalb des jeweiligen Absolutweges einnimmt.

Dadurch, daß durch einen Spannungsstoß im ersten Sensor das zweite Speicherglied zeitverzögert rücksetzbar ist und daß durch einen Spannungsstoß im zweiten Sensor das erste Speicherglied zeitverzögert rücksetzbar ist, wird sichergestellt, daß keine undefinierten Signalzustände während des Wechsels zwischen Arbeits- und Grundstellung der Speicherglieder erfolgen.

Eine weitere vorteilhafte Ausbildung der Erfindung ist dadurch gekennzeichnet, daß der erste Sensor in einem ersten und der zweite Sensor in einem zweiten Sektor einer vollen Umdrehung angeordnet sind, die räumlich unmittelbar aneinander angrenzen und die vom Lagegeber im ersten Sektor jeweils mit einem ersten und im zweiten Sektor jeweils mit einem zweiten Kennsignal detektierbar sind und daß beim Vorliegen des ersten Kennsignals der erste Speicher in seine Arbeitsstellung setzbar ist und ein eine Umdrehung im Gegenuhrzeigersinn anzeigendes Umdrehungssignal ausgelöst wird und der zweite Speicher in seine Grundstellung setzbar ist und beim Vorliegen des zweiten Kennsignals der zweite Speicher in seine Arbeitsstellung setzbar ist und ein eine Umdrehung im Uhrzeigersinn anzeigendes Umdrehungssignal ausgelöst wird und der erste Speicher in seine Grundstellung setzbar ist. Dadurch ist eine einfache Synchronisation von Lagegeber und Umdrehungsgeber gewährleistet.

Auch in diesem Zusammenhang erweist es sich als günstig, daß das Setzen in die Grundstellung jeweils zeitverzögert ist, damit Signalwechselzustände in den Speichergliedern nicht zu Signalstörungen führen.

Wenn dabei ferner ein Kennsignal jeweils nur bei einer ordnungsgemäßen Versorgungsspannung für den Lagegeber auslösbar ist, erfolgt die obengenannte Synchronisation nur bei ordnungsgemäßem Betrieb des Lagegebers.

Eine weitere vorteilhafte Ausbildung der Erfindung ist dadurch gekennzeichnet, daß die Spannungsversorgung für die Aufbereitung, Verarbeitung und Zählung der von den Sensoren gelieferten Spannungsstösse ausfallsicher ausgebildet ist. Eine derartige ausfallsichere Spannungsversorgung ist technisch deshalb relativ einfach realisierbar, da die hierzu erforderlichen Einrichtungen räumlich getrennt vom Ort der Sensoren untergebracht werden können, an dem die eingangs geschilderten rauhen Umgebungseinflüsse, insbesondere Temperaturbelastung, vorliegen, so daß beispielsweise eine Batterie-Pufferung ohne weitere Schwierigkeiten vornehmbar ist.

Ein Ausführungsbeispiel der Erfindung ist in der Zeichnung dargestellt und wird im folgenden näher erläutert.

Die Darstellung zeigt in Form eines Blockschaltbildes einen Lagegeber L und einen Umdrehungsgeber U, die starr mechanisch miteinander verbunden sind. Der Lagegeber L möge beispielsweise als optischer Drehgeber ausgebildet sein, der demzufolge eine Vielzahl von binär codierten optisch lesbaren Spuren aufweist, von denen im Symbol für den Lagegeber L die beiden Spuren mit der höchsten Wertigkeit dargestellt sind.

Die erste Spur würde demzufolge innerhalb eines Winkelbereichs 0° (durch einen Pfeil angedeutet) bis 180° ein Binärsignal logisch "0" und von 180° bis 360° ein Binärsignal logisch "1" führen, die zweite Spur würde von 0° bis 90° ein Signal logisch "0", von 90° bis 180° ein Signal logisch "1", von 180° bis 270° ein Signal logisch "0" und von 270° bis 360° ein Signal logisch "1" führen.

Die Ausgangssignale sämtlicher Spuren, im Ausführungsbeispiel beispielsweise n-Spuren, gelangen über ein Leitungssystem an eine Verarbeitungseinrichtung VE. Das Leitungssystem möge dabei, wie im unteren Teil der Figur dargestellt, aus n-Leitungen L1 bis Ln bestehen.

Der Umdrehungsgeber U ist prinzipiell als eine Scheibe dargestellt, an der ein Magnet M (durch einen ausgefüllten Kreis angedeutet) befestigt ist, der während jeweils einer Umdrehung an drei Sensoren S1, S2 und S3 vorbeistreicht und bei der Passage gegenüber jeweils einem der Sensoren S1, S2 bzw. S3 in diesem jeweils einen Spannungsstoß auslöst, der geschwindigkeitsunabhängig durch den Wiegand-Effekt erfolgt. Die Spannungsstösse in den Sensoren S1, S2 und S3 werden über zugehörige Leitungen an Verstärkerschaltungen V1, V2 und V3 einer gestrichelt angedeuteten Impulsaufbereitungsschal tung IA geleitet. Aus den Spannungsstössen wird damit jeweils ein zugeordneter, von nachgeschalteten digitalen Verknüpfungsgliedern verarbeitbarer Impuls gewonnen, der an den jeweiligen Verstärkerschaltungen V1, V2 bzw. V3 ausgangsseitig anliegt.

Die Impulsaufbereitungsschaltung IA ist mit einer Impulsausweenschaltung I verbunden, die dazu dient, aus den in der Impulsaufbereitungsschaltung IA gewonnenen Impulsen je nach Drehrichtung für jede Umdrehung des Umdrehungsgebers U ein Umdrehungssignal auszulösen, das dazu noch für jede Umdrehungsrichtung spezifisch ist. Der Impulsausweenschaltung I, auf deren Funktion im folgenden noch eingegangen wird, ist ein Vor-Rückwärts-Zähler Z nachgeschaltet, der einen Vorwärtszähleingang IV und einen Rückwärtszähleingang IR aufweist und der ausgangsseitig beispielsweise in einer Wortbreite von m-bits ein den Zählerstand des Zählers Z repräsentierende Signal an die Verarbeitungseinrichtung VE liefert, die aus diesem inkrementellen Umdrehungssignal und dem jeweils relevanten Lagesignal den aktuellen Absolutweg bildet. Dem Vorwärtszähleingang IV möge dabei jeweils für eine Umdrehung im Uhrzeigersinn ein Umdrehungssignal von der Impulsausweenschaltung I zugeführt werden und dem Rückwärtszähleingang IR des Zählers Z möge von der Impulsausweenschaltung I jeweils ein bei Gegenuhrzeigersinn vorliegendes Umdrehungssignal zugeleitet werden.

Die Impulsausweenschaltung I weist zwei Speicherglieder SP1 und SP2 auf, die jeweils beim Vorliegen eines vom Spannungsstoß im Sensor S3 (Basis-Sensor) ausgelösten Impulses der Impulsaufbereitungsschaltung IA in eine Grundstellung setzbar sind, indem der Ausgang der Verstärkerschaltung V3 über ein ODER-Glied O3 mit dem Rücksetzeingang des Speichergliedes SP1 und über ein ODER-Glied O4 mit dem Rücksetzeingang des Speichergliedes SP2 verbunden ist.

Es sei angenommen, daß bei einer Drehbewegung im Uhrzeigersinn auf den Spannungsstoß im dritten Sensor S3 ein Spannungsstoß im ersten Sensor S1 folgt. Demgemäß liegt ein Impuls am Ausgang der Verstärkerschaltung V1 vor, der über ein ODER-Glied O1 an den Setzeingang des ersten Speichergliedes SP1 gelangt, das demzufolge in seine Arbeitsstellung gesetzt wird und der ferner das zweite Speicherglied SP2 über ein Zeitglied Z2 und das ODER-Glied O4 verzögert in die Grundstellung rücksetzt.

Ein Setzen des Speichergliedes SP1 in die Arbeitsstellung bedingt, daß ein folgender Impuls auf Grund einer Beeinflussung des Sensors S2 ein Vorwärtszählen um eine Umdrehung signalisiert. Das Rücksetzen des Speichergliedes SP2 in die Grundstellung wegen der Beeinflussung des Sensors bewirkt, daß ein unmittelbar folgender Impuls kein Rückwärtszählen des Zählers Z zuläßt.

Wenn bei einer weiteren Bewegung des Umdrehungsgebers U im Uhrzeigersinn der Magnet M den Sensor S2 beeinflußt, wird ein von der Verstärkerschaltung V2 demgemäß ausgelöster Impuls über das ODER-Glied O2 dem einen Eingang eines UND-Gliedes U1 zugeführt, dessen anderer Eingang mit dem Ausgang des Speichergliedes SP1 verbunden ist. Da das Speicherglied SP1 zuvor durch Beeinflussen des Sensors S1 in seine Arbeitsstellung gesetzt worden ist und demzufolge am Ausgang des Speichergliedes SP1 ein Signal logisch "1" vorliegt, wird vom UND-Glied U1 ein Vorwärtszählimpuls für den Eingang IV des Vorwärts-Rückwärts-Zählers Z ausgelöst.

Ein Beeinflussen des Sensors S2 löst jedoch gleichzeitig über ein ODER-Glied O2 ein Setzen des Speichergliedes SP2 in die Arbeitsstellung und durch ein Zeitglied Z1 zeitverzögert über das ODER-Glied O3 ein Rücksetzen des Speichergliedes SP1 in die Grundstellung aus. Das Rücksetzen des Speichergliedes SP1 in die Grundstellung bewirkt, daß bei einer nochmaligen Beeinflussung des Sensors S2, beispielsweise aufgrund einer Pendelbewegung, kein weiterer Vorwärtszählimpuls für den Vorwärts-Rückwärts-Zähler Z ausgelöst werden kann. Das Setzen des Speichergliedes SP2 in die Arbeitsstellung bewirkt jedoch, daß dann, wenn eine Drehrichtungsumkehr erfolgen würde und in folgenden der Sensor S1 beeinflußt würde, allerdings das Generieren eines Rückwärtszählimpulses möglich wäre.

Ein Rückwärtszählimpuls wird stets dann ausgelöst, wenn am Ausgang des Speichergliedes SP2 ein Signal logisch "1" vorliegt und eine Beeinflussung des Sensors S1 erfolgt. Dann wird der jeweilige Rückwärtszählimpuls über das ODER-Glied O1 sowie ein UND-Glied U2 ausgelöst.

Außer der Impulsaufbereitungsschaltung IA und der Impulsausweteschaltung I ist eine Synchronisierschaltung SY vorgesehen, bei der u.a. die logischen Signalzustände auf den Leitungen L1 und L2 die jeweiligen Eingangsgrößen darstellen.

Sofern sich durch Signale logisch "1" auf beiden Leitungen L1 und L2 zeigt, daß der Lagegeber L sich in einem ersten Sektor von 270° bis 360° befindet, in dem der Sensor S1 des Umdrehungsgebers U angeordnet ist, liegt am Ausgang eines mit den Leitungen L1 und L2 verbundenen UND-Glieds U3 ein Signal logisch "1" als ein erstes Kennsignal vor.

Sofern auf den Leitungen L1 und L2 jeweils ein Signal logisch "0" vorliegt, deutet dies darauf hin, daß der Lagegeber L den Winkelbereich 0° bis 90° bestreicht, in dem auch der Sensor S2 des Umdrehungsgebers U sich befindet. Ein mit den Leitungen L1 und L2 verbundenes NOR-Glied N1 wird dann an seinem Ausgang ein Signal logisch "1" (zweites Kennsignal) aufweisen.

Das erste und das zweite Kennsignal werden in einem UND-Glied U4 bzw. U5 jeweils mit einem dritten Kennsignal verknüpft, das von einer Überwachungsschaltung UE generiert wird. Ein Signal logisch "1" als drittes Kennsignal weist auf einen ordnungsgemäßen Betriebszustand des Lagegebers hin. Die UND-Glieder U4 und U5 weisen jeweils noch einen dritten Eingang für ein viertes bzw. fünftes Kennsignal auf. Das vierte Kennsignal ist durch das Ausgangssignal des Speichers SP1 gebildet, d.h. ein Signal logisch "1" steht als viertes Kennsignal an, wenn ein Vorbereitungszustand für eine Vorwärtszählung vorliegt. Das fünfte Kennsignal ist durch das Ausgangssignal des Speichers SP2 gebildet, d.h. ein Signal logisch "1" liegt als fünftes Kennsignal vor, wenn ein Vorbereitungszustand für eine Rückwärtszählung besteht.

Sofern am Ausgang des UND-Gliedes U4 ein Signal logisch "1" vorliegt, wird über das ODER-Glied O2 das Speicherglied SP2 in seine Arbeitsstellung gesetzt (Vorbereitung für Rückwärtszählung) und gleichzeitig wird über das UND-Glied U1 ein Vorwärtszählimpuls ausgelöst und das Speicherglied SP1 wird zeitverzögert (über Zeitglied Z1) in seine Grundstellung gesetzt. Wenn am Ausgang des UND-Gliedes U5 ein Signal logisch "1" ansteht, wird über das ODER-Glied O1 das Speicherglied SP1 in seine Arbeitsstellung gesetzt (Vorbereitung für Vorwärtszählung) und gleichzeitig wird über das UND-Glied U2 ein Rückwärtszählimpuls ausgelöst und das Speicherglied SP2 wird zeitverzögert (über Zeitglied Z2) in seine Grundstellung gesetzt.

## Patentansprüche

1. Einrichtung zur Absolutwegerfassung mit einem über einen vorgegebenen Meßweg eine Vielzahl von Umdrehungen ausführenden Lagegeber, wobei der Lagegeber jeweils ein seiner Winkelstellung entsprechendes Lagesignal abgibt, und einem mit dem Lagegeber gekuppelten Umdrehungsgeber, wobei von einer Verarbeitungseinrichtung die jeweilige Anzahl von Umdrehungen mit der jeweiligen Lage innerhalb einer Umdrehung zu einem Absolutweg überlagerbar ist, dadurch gekennzeichnet, daß der Lagegeber (L) mit dem Umdrehungsgeber (U) starr verbunden ist, daß der Umdrehungsgeber (U) unter Anwendung des Wiegand-Effekts oder der Large-Barkhausen-Discontinuity pro Umdrehung eine vorgegebene Anzahl von in ihrer Amplitude geschwindigkeitsunabhängigen Spannungsstößen abgibt, daß durch den Umdrehungsgeber (U) während jeder Umdrehung in drei über den Umfang des Umdrehungsgebers (U) verteilten Sensoren (S1, S2, S3) jeweils ein Spannungsstoß auslösbar ist, so daß auf einen der Sensoren als Basissensor (S3) im Uhrzeigersinn die beiden anderen Sensoren als ein erster Sensor (S1) und als ein zweiter Sensor (S2) folgen, daß zum Bewerten von den Spannungsstößen zugeordneten Impulsen im Hinblick auf das Vollführen jeweils einer richtungsspezifischen Umdrehung zwei Speicherglieder (SP1, SP2) einer Impulsausweteschaltung (I) vorgesehen sind, die beim Vorliegen eines Spannungsstoßes im Basissensor (S3) in eine Grundstellung setzbar sind, daß beim Vorliegen eines Spannungsstoßes im ersten Sensor (S1) das erste Speicherglied (SP1) in dessen Arbeitsstellung setzbar ist, das zweite Speicherglied (SP2) in dessen Grundstellung setzbar ist und beim Vorliegen einer Arbeitsstellung des zweiten Speichergliedes (SP2) ein eine Umdrehung im Gegenuhrzeigersinn anzeigendes Umdrehungssignal auslösbar ist, daß beim Vorliegen eines Spannungsstoßes im zweiten Sensor (S2) das zweite Speicherglied (SP2) in dessen Arbeitsstellung setzbar ist, das erste Speicherglied (SP1) in die Grundstellung setzbar ist und beim Vorliegen einer Arbeitsstellung des ersten Speichergliedes (SP1) ein eine Umdrehung im Uhrzeigersinn anzeigendes Umdrehungssignal auslösbar ist und daß die Umdrehungssignale in einem Vor-Rückwärts-Zähler (Z) summierbar sind, dessen Zählerstand die jeweils aktuelle Anzahl der vollen Umdrehungen innerhalb des jeweiligen Absolutweges einnimmt.

2. Einrichtung nach Anspruch 1, dadurch gekennzeichnet, daß durch einen Spannungsstoß im ersten Sensor (S1) das zweite Speicherglied (SP2) zeitverzögert rücksetzbar ist und daß durch einen Spannungsstoß im zweiten Sensor (S2) das erste Speicherglied (SP1) zeitverzögert rücksetzbar ist.

3. Einrichtung nach Anspruch 1 oder 2, dadurch gekennzeichnet, daß der erste Sensor (S1) in einem ersten und der zweite Sensor (S2) in einem zweiten Sektor einer vollen Umdrehung angeordnet sind, die räumlich unmittelbar aneinander angrenzen und die vom Lagegeber (L) im ersten Sektor jeweils mit einem ersten und im zweiten Sektor jeweils mit einem zweiten Kennsignal detektierbar sind, und daß beim Vorliegen des ersten Kennsignals der erste Speicher (SP1) in eine Arbeitsstellung setzbar ist und ein eine Umdrehung im Gegenuhrzeigersinn anzeigendes Umdrehungssignal ausgelöst wird und der zweite Speicher (SP2) in seine Grundstellung setzbar ist und beim Vorliegen des zweiten Kennsignals der zweite Speicher (SP2) in seine Arbeitsstellung setzbar ist und ein eine Umdrehung im Uhrzeigersinn anzeigendes Umdrehungssignal ausgelöst wird und der erste Speicher (SP1) in seine Grundstellung setzbar ist.

4. Einrichtung nach Anspruch 3, dadurch gekennzeichnet, daß das Setzen in die Grundstellung jeweils zeitverzögert ist.

5. Einrichtung nach Anspruch 3 oder 4, dadurch gekennzeichnet, daß ein Kennsignal jeweils nur bei einer ordnungsgemäßen Versorgungsspannung für den Lagegeber (L) auslösbar ist.

6. Einrichtung nach einem der vorstehenden Ansprüche, dadurch gekennzeichnet, daß die Spannungsversorgung für die Aufbereitung, Verarbeitung und Zählung der von den Sensoren (S1, S2, S3) gelieferten Spannungsstöße ausfallsicher ausgebildet ist.

**Claims**

1. Device for determining absolute displacement having a position detector, which executes a plurality of revolutions over a given measuring bath, with the position detector, in each case, emitting a position signal which corresponds to its angular position, and having a revolution detector which is coupled with the position detector, in which case, by means of a processing device, the respective number of revolutions can be superimposed with the respective position within one revolution to give an absolute displacement, characterised in that the position detector (L) is rigidly connected with the revolution detector (U), in that by means of the Wiegand effect or Large-Barkhausen-Discontinuity the revolution detector (U) emits per revolution a given number of voltage impulses which in terms of their amplitude are independent of velocity, in that by means of the revolution detector (U) during each revolution a voltage impulse can be triggered in each of three sensors (S1, S2, S3), which are distributed over the periphery of the revolution detector (U), so that one of the sensors as base sensor (S3) is followed, in the clockwise direction, by the two other sensors as a first sensor (S1) and as a second sensor (S2), in that for the purpose of evaluating pulses associated with the voltage impulses, with regard to the execution of, in each case, one direction-specific revolution, there are provided two memory elements (SP1, SP2) of a pulse evaluation circuit arrangement (I) which with the presence of a voltage impulse in the base sensor (S3) can be set into a normal position, in that with the presence of a voltage impulse in the first sensor (S1) the first memory element (SP1) can be set into its working position, the second memory element (SP2) can be set into its normal position and with the second memory element (SP2) being in a working position a revolution signal indicating a revolution in the anti-clockwise direction can be triggered, in that with the presence of a voltage impulse in the second sensor (S2) the second memory element (SP2) can be set into its working position, the first memory element (SP1) can be set into the normal position and with the first memory element (SP1) being in a working position a revolution signal indicating a revolution in the clockwise direction can be triggered and in that the revolution signals can be added in an up/down counter (Z), the count of which takes in the respective current number of full revolutions within the respective absolute displacement.

2. Device according to claim 1, characterised in that the second memory element (SP2) can be reset in a time-delayed manner by means of a voltage impulse in the first sensor (S1) and in that the first memory element (SP1) can be reset in a time-delayed manner by means of a voltage impulse in the second sensor (S2).

3. Device according to claim 1 or 2, characterised in that the first sensor (S1) is arranged in a first sector of a full revolution and the second sensor (S2) is arranged in a second sector of a full revolution, which, spatially, are directly adjacent to each other and which can be detected by the position detector (L) in the first sector, in each case, with a first characterising signal and in the second sector, in each case, with a second characterising signal, and in that with the presence of the first characterising signal the first memory (SP1) can be set into a working position and a revolution signal indicating a revolution in the anti-clockwise direction is triggered and the second memory (SP2) can be set into its normal position and with the presence of the second characterising signal the second memory (SP2) can be set into its working position and a revolution signal indicating a revolution in the clockwise direction is triggered and the first memory (SP1) can be set into its normal position.

4. Device according to claim 3, characterised in that the process of setting into the normal position is time-delayed in each case.

5. Device according to claim 3 or 4, characterised in that a characterising signal can be triggered, in each case, only when there is a regular supply voltage for the position detector (L).

6. Device according to one of the preceding claims, characterised in that the voltage supply for the preparation, processing and counting of the voltage impulses supplied by the sensors (S1, S2, S3) is developed in a fail-safe manner.

## Revendications

1. Dispositif de détermination d'un déplacement absolu, comportant un transmetteur de position exécutant une multiplicité de rotations sur un trajet de mesure prédéterminé et délivrant respectivement un signal de position correspondant à sa position angulaire, et un transmetteur du nombre de rotations accouplé au transmetteur de position, et dans lequel un dispositif de traitement peut superposer le nombre respectif de rotations à la position respective au cours d'une rotation pour fournir un déplacement absolu, caractérisé par le fait que le transmetteur de position (L) est relié rigidement au transmetteur du nombre de rotations (U) et que le transmetteur du nombre de rotations (U) indique, moyennant l'utilisation de l'effet Wiegand ou de l'effet de Large-Barkhausen-Discontinuity pour chaque rotation, un nombre prédéterminé de chocs de tension, dont l'amplitude est indépendante de la vitesse, et que le transmetteur du nombre de rotations (U) peut déclencher, pendant chaque rotation, respectivement un choc de tension dans trois capteurs (S1, S2, S3) répartis sur le pourtour de ce transmetteur (U) de telle sorte qu'à l'un des capteurs constituant le capteur de base (S3) succèdent, dans le sens des aiguilles d'une montre, les deux autres capteurs en tant que premier capteur (S1) et second capteur (S2), que pour l'évaluation d'impulsions associées aux chocs de tension en vue de déterminer l'exécution complète respectivement d'une rotation spécifique du point de vue direction, il est prévu deux unités de mémoire (SP1, SP2) d'un circuit (I) d'évaluation d'impulsions, qui, lors de la présence d'un choc de tension dans le capteur de base (S3), peuvent être positionnées dans une position de base, que, lors de la présence d'un choc de tension dans le premier capteur (S1), la première unité de mémoire (SP1) peut être positionnée dans sa position de travail, et la seconde unité de mémoire (SP2) peut être positionnée dans sa position de base et, dans le cas où la seconde unité de mémoire (SP2) se trouve dans sa position de travail, un signal de rotation indiquant une rotation en sens inverse des aiguilles d'une montre peut être déclenché, que, lors de la présence d'un choc de tension dans le second capteur (S2), la seconde unité de mémoire (SP2) peut être positionnée dans sa position de travail la première unité de mémoire (SP1) peut être positionnée dans la position de base et, dans le cas où la première unité de mémoire (SP1) est dans sa position de travail, un signal de rotation indiquant une rotation dans le sens des aiguilles d'une montre peut être déclenché, et que les signaux de rotation peuvent être additionnés dans un compteur progressif/régressif (Z), dont l'état de comptage est égal au nombre actuel respectif des rotations complètes dans les limites du déplacement absolu respectif.

2. Dispositif suivant la revendication 1, caractérisé par le fait que la seconde unité de mémoire (SP2) peut être ramenée à l'état initial, d'une manière retardée, par un choc de tension apparaissant dans le premier capteur (SI) et que la première unité de mémoire (SP1) peut être ramenée à l'état initial d'une manière retardée, par un choc de tension apparaissant dans le second capteur (S2).

3. Dispositif suivant la revendication 1 ou 2, caractérisé par le fait que le premier capteur (S1) est situé dans un premier secteur et le second capteur (S2) dans un second secteur d'une rotation complète, ces rotations se succédant directement dans l'espace et pouvant être détectées par le transmetteur de position (L) dans le premier secteur, respectivement par un premier signal d'identification, et dans le second secteur respectivement par un second signal d'identification, et que, lors de la présence du premier signal d'identification, la première mémoire (SP1) peut être positionnée dans sa position de travail et un signal de rotation indiquant une rotation en sens inverse des aiguilles d'une montre est émis, et la seconde mémoire (SP2) peut être positionnée dans sa position de base et, lors de la présence du second signal d'identification, peut être positionnée dans sa position de travail, et qu'un signal de rotation indiquant une rotation dans le sens des aiguilles d'une montre est émis et la première mémoire (SP1) peut être positionnée dans sa position de base.

4. Dispositif suivant la revendication 3, caractérisé par le fait que le positionnement dans la position de base est respectivement retardé.

5. Dispositif suivant la revendication 3 ou 4, caractérisé par le fait qu'un signal d'identification peut être émis respectivement uniquement pour une tension d'alimentation correcte pour le transmetteur de position (L).

6. Dispositif suivant l'une des revendications précédentes, caractérisé par le fait que l'alimentation en tension pour la préparation, le traitement et le comptage des chocs de tension délivrés par les capteurs (S1, S2, S3) est réalisé de manière à être du type à sûreté intégrée.